# EUROPÄISCHE PATENTSCHRIFT

(11) **EP 3 020 892 B1**
(45) Veröffentlichungstag und Bekanntmachung des Hinweises auf die Patenterteilung: **30.06.2021**
(21) Anmeldenummer: 15194090.5
(22) Anmeldetag: 11.11.2015
(51) Int. Cl.: E05B 17/18, E05B 79/20, E05B 81/90, E05B 85/10

(54) **TÜRGRIFF MIT ABNEHMBARER KAPPE**
DOOR HANDLE WITH REMOVABLE CAP
POIGNÉE DE PORTE AVEC CAPUCHON AMOVIBLE

(30) Priorität: 13.11.2014 DE 102014116641
(43) Veröffentlichungstag der Anmeldung: 18.05.2016
(73) Patentinhaber: Huf Hülsbeck & Fürst GmbH & Co. KG, 42551 Velbert (DE)
(72) Erfinder: BECK, Andreas, 44795 Bochum (DE); WITTE, Martin, 48683 Ahaus (DE); FICHERT, Ulrike, 42349 Wuppertal (DE); GORENZWEIG, Igor Alexander, 42109 Wuppertal (DE); MÖNIG, Stefan, 58332 Schwelm (DE)
(74) Vertreter: Bals, Rüdiger

(56) Entgegenhaltungen:
- EP-A2- 2 096 237
- DE-A1- 10 309 821
- None

## Beschreibung

Die vorliegende Erfindung betrifft einen Türgriff für eine Fahrzeugtür oder Fahrzeugklappe eines Kraftfahrzeuges nach dem Oberbegriff des Anspruches 1.

Es sind bewegliche Türgriffe für Kraftfahrzeuge bekannt, die zwischen einer Schließstellung und einer ausgezogenen Offenstellung bewegbar sind. Außerdem sind feststehende Türgriffe bekannt, die dazu ausgelegt sind, ohne aktive Betätigung, gemeint ist u.a. eine Bewegung des Türgriffs, und ohne Benutzung eines mechanischen Schlüssels geöffnet zu werden. Dabei werden automatische Systeme, wie z.B. Aktiv-/ oder Passiv-Keyless-Entry-System oder das Keyless-Go-System verwendet, die es erlauben, ein Fahrzeug ohne aktives Zutun eines berechtigten Fahrers zu entriegeln und die Fahrzeugtür automatisch zu öffnen. Hierzu muss der Fahrer einen elektronischen Schlüssel in Form eines ID-Gebers mit sich tragen, um sich bei einem Sicherheitssystem im Kraftfahrzeug zu identifizieren. Meistens werden in solchen Türgriffen Näherungssensoren verwendet, die zuerst eine Präsenz eines Benutzers detektieren und danach eine Identifizierungsabfrage starten, um die Berechtigung des Benutzers zu verifizieren. Dabei kann das Sicherheitssystem mit dem ID-Geber kommunizieren, um einen Identifizierungs-Code abzufragen. Gibt es daraufhin keine korrekte Antwort, passiert nichts und das Keyless-Entry-System schaltet wieder auf Standby. Ein Ziehen am beweglichen Türgriff hat dann keine Wirkung, da ein Türschloss durch das Keyless-Entry-System nicht entriegelt wurde. Das Türschloss einer Fahrzeugtür mit einem feststehenden Türgriff wird in einem solchen Falle ebenfalls nicht betätigt. Erfolgte die Authentisierung jedoch erfolgreich, so entriegelt das Keyless-Entry-System das Türschloss und ermöglicht somit, durch Ziehen an einem beweglichen Türgriff oder durch Aktivieren eines weiteren Sensors an einem feststehenden Türgriff die Fahrzeugtür zu öffnen. Alternativ kann das Fahrzeug auch mit einer Fernbedienung geöffnet werden, die üblicherweise im Keyless-Entry-Schlüssel integriert ist. Zudem gibt es ggf. einen mechanischen Notschlüssel, mit dem sich zumindest die Fahrertür öffnen oder entriegeln lässt, wenn die Fahrzeugbatterie des Fahrzeugs entladen ist und die automatische Öffnung des Türschlosses nicht möglich ist.

In modernen Kraftfahrzeugen wird der Schließzylinder zum mechanischen Entriegeln des Türschlosses mittels eines Notschlüssels meistens durch ein Abdeckelement am Türgriff verdeckt, um den Schließzylinder vor Umwelteinflüssen zu schützen und gleichzeitig eine ansprechende, bündige Optik des Türgriffes mit der Karosserie zu erreichen. In einer Notfallsituation, z. B. bei einer gefährlichen Seitenlage, einem Unfall oder dergleichen, wird das Türschloss normalerweise automatisch entriegelt, woraufhin die Fahrzeugtür durch Ziehen an einem beweglichen Türgriff geöffnet werden kann. Bei feststehenden Türgriffen kann nach dem Entladen der Batterie kein Sensor aktiviert werden, um das Türschloss zu öffnen. Um das Türschloss dennoch öffnen zu können, kann beispielsweise am Abdeckelement ein Zugmittel vorgesehen sein, um durch Ziehen am Abdeckelement die Fahrzeugtür zu öffnen. Hierzu kann ein Schlitz in der Fahrzeugtür vorgesehen sein, um durch Eingreifen in den Schlitz, beispielsweise mit einer Kante eines Notschlüssels, das Abdeckelement anzuheben und dann bequemer an diesem ziehen zu können. Bei den feststehenden Türgriffen hat sich dabei als Nachteil herausgestellt, dass bei einem Unfall die Unfallhelfer gehindert sind, erste Hilfe zu leisten, wenn sie sich womöglich mit feststehenden Türgriffen nicht auskennen und deswegen nicht wissen, wie sie die Fahrzeugtür öffnen können. Zudem ist es von Nachteil, dass das Abdeckelement mittels manuellem Anheben beschädigt oder zerkratzt werden kann. Außerdem können die Abdeckelemente, die oftmals in Wagenfarbe lackiert sind, nicht leicht gefunden werden. Aber auch bei beweglichen Türgriffen kann es dazu kommen, dass der Türgriff klemmt, der Schließzylinder weiterhin abgedeckt bleibt und somit das Türschloss in Notfallsituationen nachteiligerweise nicht geöffnet werden kann. Im schlimmsten Falle kann dann die erste Hilfe zu spät geleistet werden. Ein gattungsgemäßer Türgriff ist ebenfalls in der Schrift DE 103 09 821 A1 offenbart.

Es ist daher Aufgabe der vorliegenden Erfindung, einen Türgriff für eine Fahrzeugtür zu schaffen, der zumindest einen der genannten Nachteile zumindest zum Teil überwindet. Insbesondere ist es Aufgabe der Erfindung, einen Türgriff bereitzustellen, der eine verbesserte, insbesondere sicherere und intuitive Betätigung des Türschlosses in einer Notfallsituation gewährleistet.

Zur Lösung dieser Aufgabe wird ein Türgriff mit den technischen Merkmalen des Anspruches 1 vorgeschlagen, denen nachfolgende besondere Bedeutung zukommt. Zweckmäßige Ausgestaltungen der Erfindung sind in den abhängigen Unteransprüchen aufgeführt. Dabei gelten technische Merkmale des erfindungsgemäßen Türgriffes, soweit dies sinnvoll ist, zu verschiedenen Ausführungsformen desselben gleichermaßen, so dass diesbezüglich wechselseitig Bezug genommen wird bzw. werden kann.

Die Erfindung schlägt dabei einen Türgriff für eine Fahrzeugtür eines Kraftfahrzeuges (KFZ) vor, der mit einem abnehmbaren Abdeckelement, insbesondere zum Abdecken eines Schließzylinders, wobei der Schließzylinder zum Ent- und Verriegeln eines Türschlosses vorgesehen ist, und wobei das Abdeckelement zwischen mindestens zwei Positionen bewegbar ist, nämlich einer Abdeckposition, in welcher insbesondere der Schließzylinder von außen unzugänglich durch das Abdeckelement abgedeckt ist, und einer Offenposition, in welcher insbesondere der Schließzylinder durch das Abdeckelement freigelegt ist, und einem Zugmittel zum Betätigen des Türschlosses ausgestaltet, wobei in der Offenposition des Abdeckelementes das Zugmittel mit dem Abdeckelement in mechanischer Wirkverbindung ist, um durch Ziehen am Abdeckelement das Türschloss zu betätigen. Dabei ist es ebenfalls denkbar, dass das erfindungsgemäße Abdeckelement nicht nur zum Abdecken eines Schließzylinder vorgesehen sein kann, sondern auch eines weiteren wesentlichen Elementes eines Türschlosses, eines Schließsystems oder eines Sicherheitssystems des Kraftfahrzeuges, wie beispielsweise eines Druckknopfes, eines Sensors, einer Antenne oder dergleichen. Mit anderen Worten kann der vorgeschlagene Türgriff für Kraftfahrzeugtüren auf der Fahrerseite und auf der Beifahrerseite sowie an den hinteren Fahrzeugtüren oder an der Kofferraumtür bzw. -klappe eingesetzt werden. Dabei können unterschiedliche Technologien zum Verriegeln und Öffnen, also zum Betätigen des jeweiligen Schlosses in der Fahrzeugtür eingebettet sein, wobei das Abdeckelement zum Verdecken und Schützen eines der wesentlichen Elemente der zur verwendenden Technologie dienen kann. Ebenfalls ist es denkbar, dass das Abdeckelement, beispielsweise auf der Fahrerseite lediglich aus Design-Gründen vorgesehen sein kann, wenn sich die Fahrzeugtüren durch Zentralverriegelung betätigen lassen, wobei ein Schließzylinder nur auf der Fahrerseite vorhanden ist. Dann kann das Abdeckelement zwar nicht zum Abdecken des Schließzylinders beitragen, kann jedoch trotzdem zum Öffnen der Beifahrertür gemäß der Erfindung ausgelegt sein. Es ist ebenfalls möglich, zunächst das Zugmittel vom Abdeckelement zu lösen, bspw. durch Lösen einer entsprechenden Verbindung zwischen dem Zugmittel und dem Abdeckelement, wie Form- und/oder Kraftschluss. Clips- und/oder Klemmverbindung, Bajonettverschluss oder dergleichen, und anschließend den Öffnungsvorgang direkt am Zugmittel einzuleiten.

Erfindungswesentlich ist es bei dem Türgriff, dass eine Auslösevorrichtung für das Abdeckelement vorgesehen ist, um das Abdeckelement, insbesondere in einer Notfallsituation, automatisch in die Offenposition zu überführen. Unter einer Notfallsituation kann beispielsweise ein Unfall, ein Elektronikausfall, ein Kurzschluss, eine gefährliche Seitenlage, zu hohe Beschleunigungen usw. verstanden werden. In einer solchen Situation kann es wichtig sein, die Fahrzeugtüren automatisch zu entriegeln und ein vereinfachtes, quasi intuitives Betätigen der Türschlösser zu ermöglichen. So kann sichergestellt werden, dass der Zugang zum Innenraum trotz aller möglichen denkbaren ungünstigen Umstände gewährleistet werden kann, um den Insassen nach einer Unfallsituation schnellstmöglich zu helfen. Hierzu ist erfindungsgemäß vorgesehen, dass das Abdeckelement in einer Notfallsituation automatisch (gemeint ist selbstständig, ohne weitere Tätigkeit einer Person) durch eine extra vorgesehene Auslösevorrichtung in die Offenposition überführt wird. Somit wird erreicht, dass das Abdeckelement nicht nur leicht gefunden und schonend gehandhabt, sondern auch leichter greifbar für eine Hilfsperson gemacht werden kann, um durch Ziehen am Abdeckelement das Türschloss zu betätigen. Dadurch ergibt sich der Vorteil, dass, sollte eine Notfallsituation sich ereignen und ein Normalbetrieb des Türschlosses nicht möglich sein, weder ein manuelles Herausziehen des Abdeckelements notwendig ist, noch dass die Hilfspersonen lange suchen müssen, wie sie das Türschloss betätigen können, um die Fahrzeugtür nach Bedarf leicht öffnen zu können. Die Auslösevorrichtung kann vorzugsweise an einer nicht direkt einsehbaren oder zumindest versteckten Position am oder im Türgriff angeordnet werden, was auch ästhetischen Gesichtspunkten Rechnung tragen kann.

Weiterhin kann gemäß der Erfindung der Türgriff als feststehender, insbesondere relativ zur Tür bzw. Klappe unbeweglicher KFZ-Türaußengriff ausgebildet sein. In diesem Fall ist der Türgriff fest an der Tür oder Klappe montierbar. Solche Türgriffe können in einer Notfallsituation, wenn die Elektronik ausfällt und/oder bei einem bloßen Stromausfall oder beim Entladen der Batterie, nicht mehr automatisch, insbesondere durch ein elektromechanisches Türschloss geöffnet werden. Auch wenn das Schließsystem nach einer solchen Notfallsituation automatisch entriegelt (jedoch nicht geöffnet) wird, so ist ein Ziehen an einem feststehenden Türgriff zwecklos. Das Türschloss bleibt dabei immer noch verschlossen. Danach kann das Abdeckelement nur noch durch einen geübten Eingriff unter den oder in den Türgriff mit Hilfe eines speziellen Werkzeuges herausgehoben werden, um durch Ziehen am Abdeckelement das Türschloss zu öffnen. Sollten sich die Personen mit der Technologie jedoch nicht auskennen, so besteht die Gefahr, dass in einer Stresssituation die Tür nicht geöffnet werden kann. Dem wirkt die Erfindung entgegen, indem sie eine spezielle Auslösevorrichtung vorschlägt, um das Abdeckelement völlig automatisch, ohne manuelles Eingreifen in die Offenposition zu überführen. Der Rest des Vorganges kann danach absolut intuitiv durchgeführt werden. Hierzu müssen die Hilfspersonen am Abdeckelement nur noch leicht ziehen, um über das daran angeschlossene Zugmittel das Türschloss insbesondere rein mechanisch zu betätigen und die Fahrzeugtür zu öffnen.

Des Weiteren kann erfindungsgemäß vorgesehen sein, dass das Zugmittel zum mechanischen Betätigen des Türschlosses ausgelegt ist. Daneben kann es erfindungsgemäß vorgesehen sein, dass das Türschloss mechanisch und/oder elektrisch betätigbar ausgebildet sein kann. Das Zugmittel ermöglicht vorteilhafterweise ein mechanisches Betätigen des Türschlosses, wenn die Elektronik versagt oder keine Energie zur Verfügung steht, um das Türschloss im Normalbetrieb zu betätigen. Dabei ist die Erfindung gleichermaßen für rein mechanische oder rein elektrische sowie Kombi(tür)schlösser anwendbar. Auch für andere Technologien, wie sensor-, druckknopf-, oder piezoelementgesteuerte Türschlösser, die zum Teil eine elektrische Ansteuerung des Türschlosses erfordern, ist die Verwendung des erfindungsgemäßen Türgriffes vorteilhaft. Dabei kann das Abdeckelement in der Abdeckposition zur Abdeckung des Sensors, des Druckknopfs, oder des Piezoelementes dienen, wobei in der Offenposition das Abdeckelement zur alternativen, rein mechanischen Betätigung des jeweiligen Elementes und/oder des entsprechenden Türschlosses dienen kann. So kann es gemäß der Erfindung immer möglich sein, die Fahrzeugtür im Notfall zu öffnen. Gemäß der Erfindung kann der Türgriff ein Teil eines Sicherheitssystems des Kraftfahrzeuges sein, welches für das Türschloss bzw. das Schließsystem der Fahrzeugtür oder aller Türen vorgesehen sein kann, dass eine berechtigte und sichere Betätigung des Türschlosses gewährleistet.

Vorteilhafterweise kann das Zugmittel flexibel in Form eines Bowdenzuges, Draht- oder Kunststoffseils oder einer Kette ausgebildet sein. Zudem ist es denkbar, dass das Zugmittel aus einem flexiblen, beispielsweise elastischen, Material ausgebildet sein kann. Dabei sind als geeignete Materialien nicht nur biegsame Metalle, wie z. B. Stahl, denkbar, sondern auch Kunststoffe, wie z. B. faserverstärkte Kunststoffe. Hierbei kann der Vorteil erreicht werden, dass beim Anheben des Abdeckelementes über das Zugmittel ein einfacher Zugriff zu einer in dem Türaußengriff angeordnete Not-Betätigung eines Öffnungsmechanismus einer Tür bzw. Türschlosses realisiert werden kann.

Erfindungsgemäß kann das Abdeckelement einen Verlierschutz, insbesondere in Form eines Gelenkes, eines Seils oder eines Scharniers, aufweisen, um das Abdeckelement in der Offenposition verlierfest am Türgriff zu halten. Dadurch ergibt sich beispielsweise der Vorteil, dass die Montage des Abdeckelementes am Türgriff auf einfache Art und Weise erfolgen kann. Weiterhin kann mithin der technische Vorteil erreicht werden, dass bei einem Abnehmen oder Entfernen das Abdeckelement nicht zu Boden fallen oder verloren gehen kann. Ferner ist es denkbar, dass insbesondere der Verlierschutz eine Verlängerung des Zugmittels sein kann. Dadurch kann eine vereinfachte Verbindung zwischen dem Abdeckelement und dem Zugmittel geschaffen werden, die gleichzeitig als Verlierschutz und/oder als Montagehilfe für das Abdeckelement dienen kann.

Vorteilhafterweise kann gemäß der Erfindung ein Arretierelement für das Abdeckelement, insbesondere in Form zumindest eines Klemm-, eines Rast- oder eines Clipelementes, vorgesehen sein, welches zwischen mindestens zwei Lagen bewegbar sein kann, nämlich einer Arretierlage, in welcher das Abdeckelement in der Abdeckposition durch das Arretierelement, insbesondere kraft- und/oder formschlüssig, abgesichert sein kann, und einer Freigabelage, in welcher das Abdeckelement zum Überführen in die Offenposition durch das Arretierelement freigegeben sein kann. Dadurch ergibt sich zum einen der Vorteil, dass das Abdeckelement auch während des Fahrbetriebs des Kraftfahrzeugs trotz der Einwirkung von Vibrationen innerhalb des Türgriffs immer fest und sicher an einer Position, nämlich der Abdeckposition, fixiert verbleibt. Zum anderen ergibt sich dadurch eine Reduzierung von Geräuschen, die durch Bewegung eines losgelösten Abdeckelementes innerhalb des Türgriffs entstehen können.

Erfindungsgemäß kann vorgesehen sein, dass das Abdeckelement durch Einführung eines Öffnungsmittels, insbesondere eines Schlüsselbarts eines Notschlüssels, in einen Schlitz im Türgriff abnehmbar ausgebildet sein kann, um mechanisch auf das Abdeckelement, insbesondere auf das Arretierelement, einzuwirken und das Abdeckelement in die Offenposition, insbesondere das Arretierelement in die Freigabelage, zu überführen. Dadurch ergibt sich der Vorteil, dass das Abdeckelement bei einem bloßen Stromausfall rein manuell betätigt werden kann. Dabei kann das Abdeckelement durch Einführen eines geeigneten Gegenstands in den Schlitz von dem Türaußengriff "aufgekantet" oder "aufgehebelt" werden. Gleichzeitig ist es denkbar, dass durch Einführen eines geeigneten Gegenstands in den Schlitz das Arretierelement betätigt werden kann, um das Arretierelement aus der Arretierlage in die Freigabelage zu überführen. Dann kann das Abdeckelement automatisch in die Offenposition aufspringen, beispielsweise durch Einwirkung eines Entspannungsdruckes einer Dichtung, durch ein spezielles Druck- und/oder Federmittel, das das Abdeckelement in seiner Offenposition vorspannen kann.

Erfindungsgemäß kann die Auslösevorrichtung ein Auslösemittel aufweisen, um bei einem Unfall oder einer Notsituation auf das Abdeckelement, insbesondere auf das Arretierelement, direkt oder indirekt, automatisch, insbesondere mechanisch, elektrisch, elektro-magnetisch, elektro-mechanisch oder pyrotechnisch, einzuwirken zu können und das Abdeckelement in die Offenposition, insbesondere das Arretierelement in die Freigabelage, zu überführen. Die Erfindung geht dabei von dem Gedanken aus, dass neben einem normalen Betriebsmodus des Türschlosses, wenn alle Systeme ordnungsgemäß funktionieren und genug Energie für automatisches Betätigen der Schließvorrichtung vorhanden ist, und neben dem Betriebsmodus, wenn die Energie nicht zur Verfügung steht, insbesondere wenn die Autobatterie entladen ist und nur ein manuelles Betätigen das Abdeckelementes möglich ist, ein weiterer Notfall-Betriebsmodus vorgesehen sein kann. Dieser Betriebsmodus ist für die Fälle vorgesehen, wenn sich eine Notfallsituation ereignet, aber auch für die Fälle, wenn lediglich die Energie verbraucht ist. Gemäß der Erfindung wird dabei durch die Auslösevorrichtung, insbesondere durch das Auslösemittel, bewirkt, dass das Abdeckelement oder das Arretierelement direkt oder indirekt betätigt wird, um das Abdeckelement in die Offenposition bzw. das Arretierelement in die Freigabelage zu überführen. Dabei ist es denkbar, dass das Auslösemittel dann aktiviert werden kann, wenn alle weiteren Systeme versagt haben oder vorübergehend nicht funktionsfähig sind. Das Auslösemittel kann unterschiedliche Technologien ausnutzen, um in einer Notfallsituation auszulösen. Denkbar ist dabei eine mechanische Funktion des Auslösemittels, wenn beispielsweise bei einem Unfall die Verformungsenergie der Fahrzeugaußenhaut oder die Bewegung eines Crashhebels dazu genutzt wird, das Auslösemittel zu betätigen. Eine elektrische Funktion des Auslösemittels ist beispielsweise denkbar, wenn die Notfallsituation zum Aktivieren eines Notenergiespeichers zum Betätigen des Auslösemittels führt. Kombinierte elektro-magnetische oder elektro-mechanische Funktion des Auslösemittels ist dabei ebenfalls denkbar, wenn die mechanische Verformung ein elektrisches oder magnetisches Aktivieren des Auslöseelementes bewirken kann. Zunächst aber nicht zuletzt ist eine pyrotechnische Funktion des Auslösemittels möglich, wenn durch eine gezielte minimale Sprengung, ausgelöst durch die Notfallsituation, ein Aktivieren des Auslöseelementes nach sich ziehen kann.

Als Auslösesensor (auch Notfallsituationssensor bzw. Crashsensor genannt) für die elektrische Funktion des Auslösemittels kann ein Crashsensor, ein Beschleunigungssensor, ein Neigungssensor oder dergleichen zum Einsatz kommen.

Gemäß der Erfindung kann zudem vorgesehen sein, dass das Auslösemittel in Form eines Form-Gedächtnis-Legierungs-Elementes (FGL-Elementes), eines permanenten oder elektrischen Magneten, z. B. einer Spule, eines Piezoelementes oder eines pyrotechnischen Elementes ausgebildet sein kann. Vorteilhafterweise kann das Form-Gedächtnis-Legierungs-Element nach dem Erkennen einer Notfallsituation unter Strom gestellt werden, wodurch es sich erwärmen und sich dadurch mechanisch verformen kann. Die mechanische Verformung des Form-Gedächtnis-Legierungs-Elementes kann dann erfindungsgemäß dazu genutzt werden, die Auslösevorrichtung zu aktivieren, um das Arretierelement in die Freigabelage und/oder das Abdeckelement in die Offenposition zu überführen. Vorteilhafterweise kann dabei das Auslösemittel in Form eines Drahtes aus einer Form-Gedächtnis-Legierung hergestellt sein, der einen Durchmesser zwischen 0,1 mm und 1 mm, insbesondere zwischen 0,2 mm und 0,8 mm, insbesondere 0,4 mm, aufweisen kann. Hierbei kann in allen Temperaturbereichen, von -40 bis +85 °C, eine Zugkraft von mindestens 20 bis 80 N, insbesondere 25 N, durch das Form-Gedächtnis-Legierungs-Element erzeugt werden, um das Abdeckelement bzw. das Arretierelement zu betätigen. Diese Zugkraft kann nach einem kurzen Stromanlegen von 1 bis 3 s, insbesondere von 1,5 s erzeugt werden. Dabei muss der Strom nicht über 3,5 A angelegt werden, bei einer bevorzugten Spannung im Kraftfahrzeug, die vorzugsweise 12 V beträgt. Ein Auslösemittel in Form eines permanenten Magneten kann beispielsweise durch die Verformung des Türbleches den permanenten Magneten derart verschieben, um das Arretierelement und/oder das Abdeckelement und/oder ein Druckmittel oder ein Haltemittel für das Arretierelement oder für das Abdeckelement anzuziehen oder abzustoßen, um entsprechend das Arretierelement und/oder das Abdeckelement zu betätigen. Anstelle des permanenten Magneten kann auch eine Spule für die erforderliche Magnetkraft genutzt werden, die ebenfalls bestromt werden kann. Ein Piezoelement kann ggf. die mechanische Verformungsenergie des Türbleches in elektrische Energie umwandeln, um das Arretierelement und/oder das Abdeckelement zu betätigen. Auch kann das Piezoelement durch den Auslösesensor bestromt werden. Schließlich ist es denkbar, dass ein pyrotechnisches Element durch mechanische Verformungsenergie des Türbleches aktiviert werden kann, wodurch eine gezielte kontrollierte Sprengung eingeleitet werden kann, um das Arretierelement und/oder das Abdeckelement zu betätigen. Hierbei ist es ebenfalls denkbar, dass der Auslösesensor das pyrotechnische Element aktivieren kann.

Hierzu kann erfindungsgemäß vorgesehen sein, dass die Auslösevorrichtung mit mindestens einem Notfallsituationssensor bzw. Crashsensor in Verbindung bringbar sein kann, wobei insbesondere bei Detektieren einer Notfallsituation durch den mindestens einen Notfallsituationssensor die Auslösevorrichtung aktiviert werden kann, um das Abdeckelement in die Offenposition, insbesondere das Arretierelement in die Freigabelage, zu überführen. Dabei sind unterschiedliche Notfallsensoren denkbar, die die unfallbedingt herausragenden Werte detektieren können, wie einen zu großen Neigungswinkel, eine zu hohe Geschwindigkeit oder Beschleunigung oder eine zu starke mechanische Verformung des Kraftfahrzeuges oder dergleichen.

Erfindungsgemäß können das Abdeckelement und das Zugmittel direkt oder über ein Verbindungsmittel miteinander verbunden sein. Dabei kann das Verbindungsmittel in Form einer Aufnahme, eines Hakens, einer Öse, einer Klemme oder eines Clips, insbesondere an dem Abdeckelement, ausgebildet sein, um am Zugmittel einzugreifen. Dadurch ergibt sich beispielsweise der Vorteil, dass das Verbinden des Zugmittels mit dem Abdeckelement auf einfache Art und Weise erfolgen kann. Insbesondere im Rahmen der Montage kann ein Ende des Zugmittels schnell und einfach mit dem Verbindungselement verbunden werden. Dadurch kann sowohl das rein mechanische Betätigen des Zugmittels als auch das notfallsituationsbedingte Aktivieren des Zugmittels über das Abdeckelement durch die Auslösevorrichtung vereinfacht werden.

Ferner kann es vorteilhaft sein, wenn das Abdeckelement und das Verbindungselement materialeinheitlich, insbesondere als ein monolithisches Bauteil, ausgebildet sind. Mit anderen Worten können das Abdeckelement und das Verbindungselement als ein integrales Bauteil gefertigt sein. Dadurch ergibt sich der Vorteil, dass sich der Aufwand in der Herstellung der beiden Elemente als nur ein Bauteil reduziert werden kann, da zumindest ein Arbeitsschritt des Zusammenfügens von Verbindungselement und Abdeckelement erspart bleibt. Weiterhin ergibt sich dadurch der Vorteil, dass im Falle der Notwendigkeit des Betätigens des Zugmittels eine verbesserte Zugkraft vom Abdeckelement auf das Zugmittel übertragen werden kann. Folglich muss ein Nutzer beim Bedienen bzw. Betätigen des Zugmittels nicht erst das Abdeckelement betätigen und danach das Ende des Zugmittels suchen, um das Türschloss betätigen zu können, sondern kann einfach durch Greifen und Ziehen am Abdeckelement das Zugmittel herausziehen und ein Notöffnen der Fahrzeugtür bewirken.

Vorteilhafterweise können der Türgriff und/oder das Abdeckelement aus einem Kunststoff, insbesondere in Form eines Kunststoffspritzgussteils, ausgebildet sein. Dies ermöglicht eine kostengünstige und einfache Herstellung sowie Reduktion des Gewichts dieser Elemente. Dabei ist es denkbar, dass der Türgriff und/oder das Abdeckelement von außen verchromt und/oder lackiert sein können, um ein ebenmäßiges, hochwertiges Erscheinungsbild der Fahrzeugtür zu gewährleisten.

Erfindungsgemäß ist eine Steuereinheit für die Auslösevorrichtung vorgesehen, um die Auslösevorrichtung anzusteuern. Hierzu kann die Steuereinheit in einer zentralen Steuereinheit des Kraftfahrzeuges integriert sein oder als eine separate Steuereinheit ausgebildet sein. Im letzteren Falle ist es denkbar, dass die Steuereinheit in der Fahrzeugtür, insbesondere direkt im Türgriff integriert sein kann. Gleichzeitig ist es denkbar, dass die Steuereinheit vorteilhafterweise autonom von der Fahrzeugbatterie betrieben werden kann und/oder sich selbst mit Energie versorgen kann. Dabei ist es denkbar, dass die Steuereinheit mit einer eigenen Notenergiequelle ausgestaltet sein kann oder über einen Mechanismus verfügen kann, der die Notsituation ausnutzt, um Energie zu schaffen, wie beispielsweise durch Ausnutzen von Beschleunigungs-, Brems- und/oder Verformungsenergie. Dabei ist es vorteilhaft, dass die Steuereinheit und die Auslösevorrichtung somit von sämtlichen anderen Fahrzeugsystemen unabhängig agieren und auch im Notfall störfrei funktionieren können. Vorteilhafterweise können dabei die entsprechende Elektronik und die dazugehörigen Notfallsituationssensoren zusammen mit der Steuereinheit im Türgriff integriert sein.

Gemäß der Erfindung kann im Türgriff ein Keyless-Entry-System als ein Sicherheitssystem für das Schließsystem bzw. das Türschloss der Fahrzeugtür ganz oder zum Teil integriert sein. Dabei kann es vorteilhaft sein, wenn im oder am Türgriff, insbesondere unterhalb des Abdeckelementes, mindestens ein Näherungssensor, insbesondere in Form eines kapazitiven, eines optischen, eines akustischen Sensors oder eines Drucksensors, integriert sein kann, um eine Annäherung eines Benutzers an das Kraftfahrzeug zu erfassen. Nachdem Erkennen einer Annäherung kann das Sicherheitssystem im Kraftfahrzeug aktiviert werden, um eine Berechtigungsabfrage mit einem ID-Geber durchzuführen. Daraufhin kann im Falle einer positiven Authentifizierung mittels eines weiteren Sensors im Türgriff die Absicht des berechtigten Benutzers detektiert werden, die Fahrzeugtür zu öffnen, indem das Eingreifen einer Hand des Benutzers in die Griffmulde des Türgriffes sensiert werden kann. Vorteilhafterweise können dabei im Türgriff, insbesondere unterhalb des Abdeckelementes, zwei Näherungssensoren, insbesondere zwei kapazitive Sensoren integriert sein, um einen vom Türgriff nach außen gerichteten Bereich und einen vom Türgriff nach innen gerichteten Bereich in der Griffmulde überwachen zu können.

Weitere Maßnahmen und Vorteile sowie technische Merkmale der Erfindung ergeben sich aus den Ansprüchen, der nachfolgenden Beschreibung und den Zeichnungen. Dabei können unterschiedliche Merkmale für sich alleine und in einer beliebigen Kombination vorteilhaft sein, ohne den Rahmen der Erfindung zu verlassen. In den nachstehenden Figuren ist der erfindungsgemäße Türgriff in mehreren Ausführungsbeispielen detailliert dargestellt. Es zeigen:
- Fig. 1: eine schematische Darstellung eines erfindungsgemäßen Türgriffes,
- Fig. 2a: eine schematische Schnittdarstellung eines erfindungsgemäßen Abdeckelementes in einer Abdeckposition,
- Fig. 2b: eine schematische Darstellung des erfindungsgemäßen Abdeckelementes in einer Offenposition,
- Fig. 3: eine Querschnittdarstellung des erfindungsgemäßen Türgriffes,
- Fig. 4a: eine Längsschnittdarstellung des erfindungsgemäßen Türgriffes gemäß einer ersten Ausführungsform,
- Fig. 4b: eine Schnittdarstellung des erfindungsgemäßen Türgriffes gemäß Figur 4a entlang einer vertikalen Schnittlinie S-S,
- Fig. 5: eine Rückansicht des erfindungsgemäßen Türgriffes gemäß einer zweiten Ausführungsform,
- Fig. 6a: eine perspektivische Darstellung des erfindungsgemäßen Abdeckelementes von innen, und
- Fig. 6b: eine perspektivische Darstellung eines erfindungsgemäßen Zugmittels.

In den nachfolgenden Figuren werden für die gleichen technischen Merkmale auch von unterschiedlichen Ausführungsbeispielen die identischen Bezugszeichen verwendet.

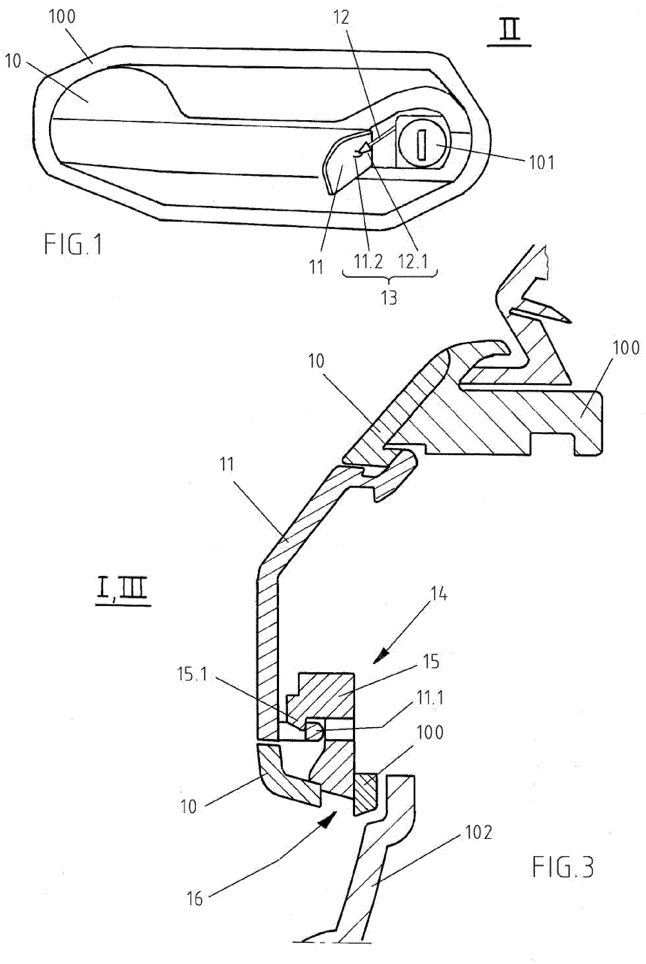

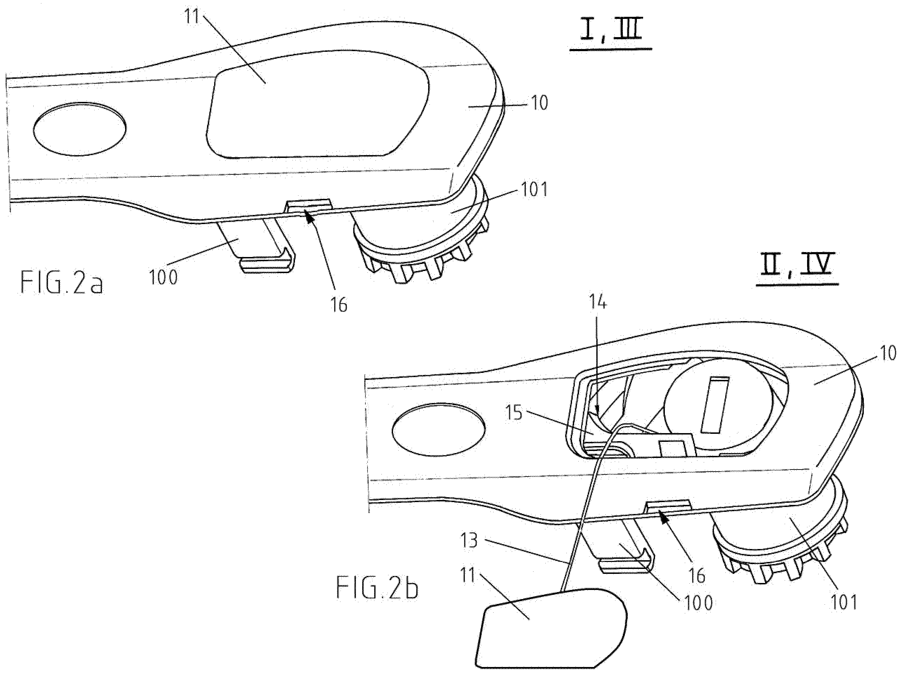

In der Figur 1 ist ein erfindungsgemäßer Türgriff 10 an einer Fahrzeugtür 102 oder Fahrzeugklappe 102 oder einer Fahrzeugkarosserie 102 gezeigt, der mit einem abnehmbaren Abdeckelement 11 ausgelegt ist, welches insbesondere zum Abdecken eines Schließzylinders 101 dient. Der Schließzylinder 101 ist hierbei zum Ent- und Verriegeln eines nicht dargestellten Türschlosses vorgesehen. Der Türgriff 10 ist an einem Montageelement 100 an der Karosserie 102 des Kraftfahrzeuges (Fahrzeugaußenhaut 102) angebracht und stellt ein Teil eines Sicherheitssystems im Kraftfahrzeug dar. Das Abdeckelement 11 ist gemäß der Erfindung zwischen mindestens zwei Positionen beweglich gelagert: einer Abdeckposition I, in welcher der Schließzylinder 101 von außen unzugänglich durch das Abdeckelement 11 abgedeckt ist und welche in den Figuren 2a, 3, 4a und 4b gezeigt ist, und einer Offenposition II, in welcher der Schließzylinder 101 durch das Abdeckelement 11 freigelegt und von außen frei zugänglich ist. Die Offenposition II des Abdeckelementes 11 ist in den Figuren 1 und 2b dargestellt. Ferner ist eine herausgezogene Position des Abdeckelementes 11 denkbar, die im Folgenden ausführlich erklärt wird. Ferner ist der erfindungsgemäße Türgriff 10 mit einem Zugmittel 12 zum Betätigen des nicht gezeigten Türschlosses ausgestaltet, wobei das Abdeckelement 11 und das Zugmittel 12 mechanisch durch ein Verbindungsmittel 11.2 am Abdeckelement 11 und ein komplementäres Verbindungsmittel 12.1 am Zugmittel 12 verbunden sind. Das Verbindungsmittel 11.2 am Abdeckelement 11 und das komplementäre Verbindungsmittel 12.1 am Zugmittel 12 bilden zusammen einen Verlierschutz 13 für das Abdeckelement 11, der dafür sorgt, dass das Abdeckelement 11 in der Offenposition II am Türgriff 10 gehalten wird und nicht verloren geht, sogar dann, wenn das Abdeckelement 11 herausgezogen wird. Wenn das Abdeckelement 11 offen ist, kann erfindungsgemäß durch Ziehen am Abdeckelement 11 das Zugmittel 12 betätigt werden, um das Türschloss mechanisch zu öffnen.

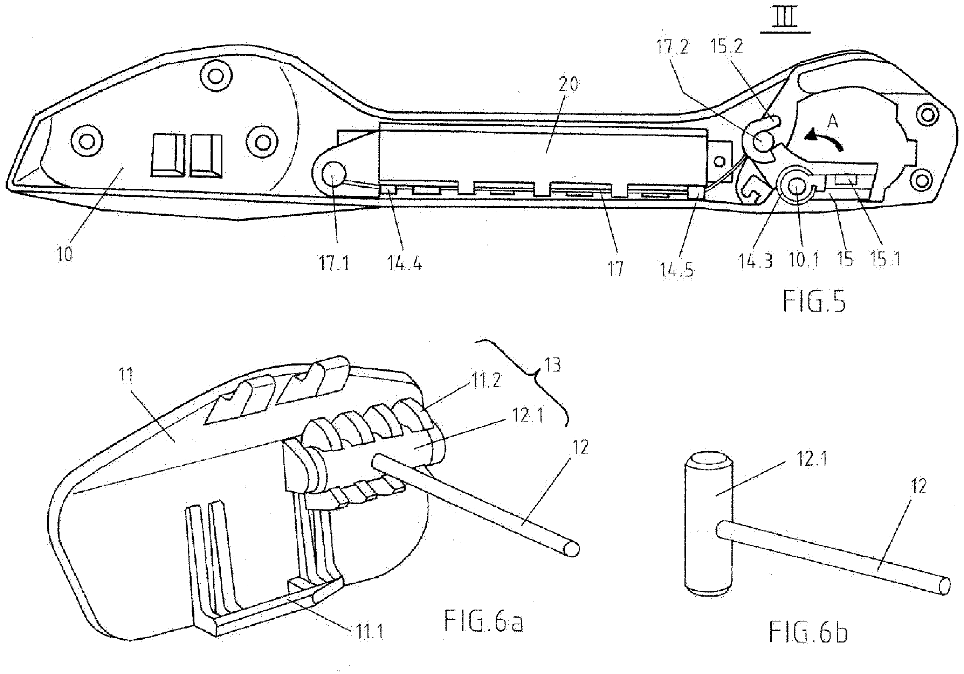

Das Verbindungsmittel 11.2 ist im Beispiel der Figur 1 in Form eines Hakens ausgeführt, in welches das komplementäre Verbindungsmittel 12.1 in Form einer Schlaufe eingreift, um die Verbindung zwischen dem Abdeckelement 11 und dem Zugmittel 12 herzustellen. Im Beispiel der Figuren 6a und 6b ist das Verbindungsmittel 11.2 in Form einer Aufnahme mit mehreren Rastelementen ausgebildet, die das komplementäre Verbindungsmittel 12.1 in Form eines Zylinders umspannen, der am Ende des Zugmittels 12 ausgebildet ist. Daneben sind viele weitere Ausführungsformen der Verbindungsmittel 11.2 und 12.1 denkbar, die einen Verlierschutz 13 herstellen können und die eine, insbesondere form- und/oder kraftschlüssige, bevorzugt eine lösbare Verbindung zwischen dem Abdeckelement 11 und dem Zugmittel 12 gewährleisten können. Alternativ ist jedoch ebenfalls denkbar, dass das Abdeckelement 11 und das Zugmittel 12 materialeinheitlich, insbesondere als ein monolithisches Bauteil, ausgebildet sein können.

Das Zugmittel 12 ist gemäß der Erfindung in Form eines Bowdenzuges ausgebildet. Der Bowdenzug führt zum dem nicht gezeigten Türschloss, um mechanisch die Wirkung des Betätigens des Abdeckelementes 11 auf das Türschloss zu übertragen, wenn das Türschloss durch die ebenfalls nicht gezeigte Schließvorrichtung entriegelt ist. Gleichzeitig ist es denkbar, dass das Zugmittel 12 aus einem beliebigen flexiblen, beispielsweise elastischen, Material ausgebildet sein kann, dass in die Zugrichtung die Zugkraft auf das Türschloss übertragen kann. Die mechanische Betätigung des Türschlosses durch Ziehen am Zugmittel 12 kann eine, insbesondere rein mechanische Not-Betätigung des Türschlosses darstellen, wobei die betriebsbedingte Wirkungsweise des Türschlosses gleichermaßen mechanisch, elektrisch oder elektro-mechanisch sein kann.

Bei dem gezeigten Türgriff 10 handelt es sich um einen feststehenden Türgriff 10, der unbewegbar zur Karosserie 102 an einem Montageelement 100 montiert ist, wie beispielsweise in der Figur 2 gezeigt ist. Der feststehende Türgriff 10 ist dazu ausgelegt, ohne aktive Betätigung, d. h. ohne das Herausziehen des Türgriffes 10 bezüglich der Türaußenhaut 102 das Öffnen der Fahrzeugtür zu bewirken. Erfindungsgemäß kann für den Türgriff 10 das Keyless-Entry-System als Sicherheitssystem verwendet sein. Ein solches System dient im Normalbetrieb dazu, ein Fahrzeug ohne aktives Zutun eines berechtigten Fahrers zu entriegeln und die Fahrzeugtür automatisch zu öffnen. Um das Keyless-Entry-System zu aktivieren, muss der Fahrer einen entsprechenden ID-Geber (gemeint ist ein elektronischer Schlüssel oder Funkschlüssel) mit sich tragen, der mit dem Keyless-Entry-System kommunizieren kann, um sich als berechtigter Benutzer auszuweisen. In dem erfindungsgemäßen Türgriff 10 sind optional für das Keyless-Entry-System zwei nicht näher dargestellte Näherungssensoren eingebettet. Die Figur 5 zeigt dabei schematisch, dass eine Elektronik 20 innerhalb des Türgriffes 10 angeordnet werden kann, um ein automatisches Betätigen des Türschlosses zu gewährleisten. Die Elektronik 20 kann dabei das Keyless-Entry-System, samt den Näherungssensoren, Kommunikationselementen und einer Steuereinheit, ganz oder zum Teil beherbergen bzw. umfassen. Ein erster Näherungssensor kann dabei den außen liegenden Bereich des Kraftfahrzeuges überwachen und dazu dienen, eine Präsenz eines Benutzers in diesem Bereich zu detektieren. Abschließend kann die Elektronik 20 dafür sorgen, dass eine Identifizierungsabfrage zwischen dem Keyless-Entry-System und dem ID-Geber durchgeführt wird. Dabei kann das Keyless-Entry-System bei dem ID-Geber einen Identifizierungs-Code abfragen. Gibt es daraufhin keine korrekte Antwort, passiert nichts mehr und das Keyless-Entry-System schaltet sich wieder aus oder geht auf Standby. Gibt es daraufhin aber eine korrekte Antwort, so entriegelt das Keyless-Entry-System das Türschloss und aktiviert bzw. überprüft den zweiten Näherungssensor, der die innen liegende Türgriffmulde nach einer Präsenz einer Benutzerhand überwacht, um die Absicht des Benutzers zu detektieren, das Türschloss öffnen zu wollen. Danach kann die Fahrzeugtür 102 automatisch unter der Wirkung einer Türdichtung aufspringen oder durch Ziehen an der Fahrzeugtür 102 durch Greifen am Türgriff 10 geöffnet werden. Dabei verändert der erfindungsgemäße feststehende Türgriff 10 seine Position gegenüber der Fahrzeugkarosserie 102 nicht. Ebenfalls kann die Fahrzeugtür 102 durch Drücken eines Knopfes am ID-Geber nach einer Art Fernbedienung geöffnet werden.

Wenn jedoch die Batterie im ID-Geber oder die Fahrzeugbatterie entladen ist, kann die automatische Betätigung des Türschlosses nicht realisiert werden, da die Energie fürs Betreiben der Näherungssensoren oder für die Sicherheitsabfrage fehlt. In diesem Falle gibt es noch einen mechanischen Notschlüssel, der in dem ID-Geber integriert ist, mit dem sich zumindest die Fahrertür öffnen lässt, wenn der Schließzylinder 101 zugänglich gemacht wird. Hierzu muss das Abdeckelement 11 in die Offenlage II, die in den Figuren 1 und 2b zu sehen ist, überführt werden.

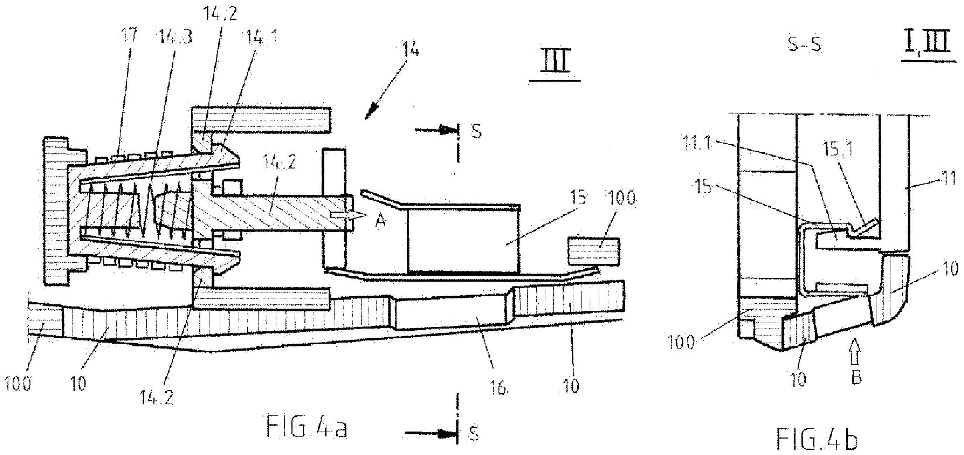

Wenn bloß die Energie in dem ID-Geber und/oder Keyless-Entry-System verbraucht ist, so kann anschließend, wie gezeigt in den Figuren 3 und 4b verfahren werden, um das Türschloss mechanisch öffnen zu können. Dazu ist ein Schlitz 16 im Türgriff 10 vorgesehen (siehe die Figuren 1, 2a, 2b, 4a und 4b), um durch Eingreifen in den Schlitz 16, beispielsweise mit einer Kante eines Notschlüssels, das Abdeckelement 11 anzuheben und dann bequemer an diesem ziehen zu können. Wie in den Figuren 3 und 4b zu erkennen ist, kann das Abdeckelement 11 durch ein Arretierelement 15 gesichert sein, wenn sich das Abdeckelement 11 in der Abdeckposition I befindet und bündig zu dem restlichen Türgriff 10 steht. Dann kann durch Eingreifen in den Schlitz 16 das Arretierelement 15 angehoben werden, um das Abdeckelement 11 freizugeben. Das Arretierelement 15 weist erfindungsgemäß zwei Lagen auf: eine Arretierlage III, in welcher das Abdeckelement 11 in der Abdeckposition I durch das Arretierelement kraft- und/oder formschlüssig gehalten ist (siehe die Figuren 2a, 3, 4a und 4b), und eine Freigabelage IV, in welcher das Abdeckelement 11 zum Überführen in die Offenposition I durch das Arretierelement 15 freigegeben ist (siehe die Figuren 1 und 2b). Vorteilhaft ist dabei, dass das Abdeckelement 11 auch während des Fahrbetriebs des Kraftfahrzeugs sicher in der Abdeckposition II fixiert bleibt. Für die form- und/oder kraftschlüssige Fixierung des Abdeckelementes 11 weist das Abdeckelement 11 ein Rastmittel 11.1 auf, welches mit einem komplementären Gegenrastmittel 15.1 des Arretierelementes 15 wechselwirken kann, wie dies in den Figuren 3, 4b, 5 und 6a gezeigt ist. Wird durch den Notschlüssel, das Arretierelement in Richtung B, wie gezeigt in der Figur 4b angehoben, so wird das Rastmittel 11.1 durch das Gegenrastmittel 15.1 freigegeben. Das Abdeckelement 11 ist dann frei, um abgenommen zu werden. Alternativ ist es aber gleichwohl denkbar, dass das Abdeckelement 11 direkt durch das passende Werkzeug angehoben werden kann. Die Figur 5 zeigt dabei eine weitere mögliche Ausgestaltung des Arretierelementes 15, welches um einen Stift 10.1 auf der Innenseite des Türgriffes 10 schwenkbar gelagert ist und durch eine Feder 14.3 in die Arretierlage III belastet ist, in welcher das Gegenrastmittel 15.1 in Form einer Nase in eine entsprechende Aufnahme 11.1 als Rastmittel 11.1 am Abdeckelement 11 eingreift. Ein speziell ausgebildetes Auslösemittel 17 kann bewirken, dass das Arretierelement 15 in die Freigabelag IV verschwenken kann und das Abdeckelement 11 freigeben kann. Auf die Ausgestaltung des Auslösemittel 17 wir nachfolgend unter Bezugnahme auf die Figuren 4a, 4b und 5 eingegangen.

Bei den feststehenden Türgriffen, wie in dem gezeigten Türgriff 10, muss jedoch die Situation berücksichtigt werden, dass fremde Personen, die sich mit solchen Türgriffen 10 nicht auskennen, bei einem Unfall womöglich durch den Stress gehindert sind, ruhig zu überlegen und herauszufinden, wie das unbekannte Türschloss geöffnet werden kann. Das Abdeckelement 11, welches fließend zu dem restlichen Türgriff 10 und der Fahrzeugkarosserie 102 verläuft, kann dabei außerdem leicht übersehen werden. Außerdem kann der Schlitz 16, ohne von dessen Präsenz sowie Funktion zu wissen, in einer Notfallsituation nicht leicht erkannt werden, geschweige denn richtig benutzt werden. Aber auch bei beweglichen Fahrzeugtüren 102 kann es dazu kommen, dass der Türgriff 10 klemmt und der Schließzylinder 101 weiterhin durch das Abdeckelement 11 abgedeckt bleibt.

Die Erfindung wirkt den genannten Nachteilen entgegen, indem sie dafür sorgt, dass bei Auftreten einer Notfallsituation, das Abdeckelement 11 automatisch geöffnet wird. Danach kann quasi intuitiv vorgegangen werden, um den Schließzylinder 101 zu betätigen und das Türschloss zu öffnen. Die Erfindung schlägt dabei vor, dass eine Auslösevorrichtung 14 für das Abdeckelement 11 vorgesehen ist, um das Abdeckelement 11, insbesondere in einer Notfallsituation, automatisch in die Offenposition II zu überführen. Erfindungsgemäß kann eine Notfallsituation bei einem Unfall, einem Elektronikausfall, einem Kurzschluss, einer gefährlichen Seitenlage, zu hohen Beschleunigungen oder dergleichen entstehen. In einer solchen Situation ist es wichtig sicherzustellen, dass der Zugang zum Fahrzeuginnenraum nicht verhindert wird, falls Hilfe nötig ist und/oder die Passagiere sich nicht selbst aus dem Inneren des Fahrzeuges befreien können.

Erfindungsgemäß werden die Fahrzeugtüren 102 nach dem Erkennen einer Notfallsituation zunächst automatisch entriegelt. Anschließend oder auch gleichzeitig bewirkt die erfindungsgemäße Auslösevorrichtung 14, dass das Abdeckelement 11 automatisch aufspringt. Danach kann das Abdeckelement 11 rein intuitiv betätigt werden, um das Türschloss zu öffnen. Hierzu muss am Abdeckelement 11 lediglich gezogen werden, wobei das Zugmittel 12 die mechanische Zugkraft auf das Türschloss überträgt. Dadurch, dass das Abdeckelement 11 automatisch aufspringt, kann es leicht gefunden werden. Weiterhin ist es vorteilhaft, dass das Abdeckelement 11 schonend gehandhabt werden kann, ohne beschädigt oder zerkratzt zu werden, da es durch automatisches Öffnen leichter greifbar gemacht wird. Auch müssen die Hilfspersonen im Falle eines Unfalles nicht lange suchen oder überlegen, wie sie das Türschloss freilegen und betätigen zu können, um in den Fahrzeuginnenraum zu gelangen. Die Auslösevorrichtung 14 ist erfindungsgemäß innerhalb des Türgriffes 10 angeordnet.

Erfindungsgemäß ist die Auslösevorrichtung 14 mit einem Auslösemittel 17 ausgeführt, welches in einer Notfallsituation auf das Abdeckelement 11 oder auf das Arretierelement 15 direkt oder indirekt, insbesondere automatisch einwirken kann und das Abdeckelement 11 in die Offenposition II oder das Arretierelement 15 in die Freigabelage IV überführen kann. Dabei zeigen die Figuren 4a und 4b eine erste mögliche Ausgestaltung der Auslösevorrichtung 14 und die Figur 5 eine zweite mögliche Ausgestaltung der Auslösevorrichtung 14, die nachfolgend im Einzelnen beschrieben werden. Gemäß beider Beispiele ist das Auslösemittel 17 in Form eines Form-Gedächtnis-Legierungs-Elementes (FGL-Elementes) ausgebildet, welches nach dem Erkennen einer Notfallsituation unter Strom gestellt wird, wodurch es sich erwärmen und sich dadurch mechanisch verformen kann. Die mechanische Verformung des Form-Gedächtnis-Legierungs-Elementes 17 kann dann erfindungsgemäß dazu genutzt werden, das Arretierelement 15 in die Freigabelage IV zu überführen.

Die Figuren 4a und 4b zeigen die Auslösevorrichtung 14 mit einem Auslösemittel 17 in Form eines Drahtes, welches um ein konusförmiges Haltemittel 14.1 gewickelt ist. Das Haltemittel 14.1 ist dabei mit einer geschlossenen, schmaleren Seite am Montageelement 100 befestigt und weist an einem anderen offenen Ende außenseitig einen vorsprungartigen Ring auf. Im Normalbetriebsmodus des Kraftfahrzeuges liegt das Auslösemittel 17 am Haltemittel 14.1 locker an. Dabei greift das offene Ende des Haltemittels 14.1 mit dem Ring als Rastmittel in eine ringförmige Öffnung in einem Druckmittel 14.2 ein. Das Haltemittel 14.1 hält somit das Druckmittel 14.2 beabstandet zum Arretierelement 15, welches sich dabei in der Arretierlage III befindet. Durch eine Druckfeder 14.3, die zwischen dem Haltemittel 14.1 und dem Druckmittel 14.2 vorgespannt ist, ist das Druckmittel 14.2 mit einem Vorsprung in Richtung A zum Arretierelement 15 vorgespannt. Sollte sich dabei die Rastverbindung zwischen dem Haltemittel 14.1 und dem Druckmittel 14.2 lösen, so wird das Druckmittel 14.2 in Richtung A zum Arretierelement 15 beschleunigt. Dadurch kann das Arretierelement 15 angehoben und das Abdeckelement 11 freigegeben werden. Wie in der Figur 4b gezeigt ist, kann dabei die Rastverbindung zwischen dem Rastmittel 11.1 des Abdeckelementes 11 und dem Gegenrastmittel 15.1 des Arretierelementes 15 aufgehoben werden. Dadurch kann das Arretierelement 15 aus der Arretierlage III in die Freigabelage IV überführt werden, wodurch das Abdeckelement 11 aus der Abdeckposition I in die Offenposition II bewegt werden kann. Erfindungsgemäß kann hierzu das Auslösemittel 17 unter Strom gestellt werden, das sich daraufhin erwärmt und zusammenspannt, so dass das offene Ende des Haltemittels 14.1 zusammengedrückt wird und das Druckmittel 14.2 freigegeben wird. Um die notwendige Energie zu erhalten, kann im Türgriff 10 eine separate Energiequelle, z. B. eine Batterie, vorgesehen sein, die nach dem Erkennen einer Notfallsituation mittels eines oder mehrerer nicht gezeigter Notfallsituationsensoren das Auslösemittel 17 unter Strom stellen kann. Alternativ ist es ebenfalls denkbar, dass die Energie dadurch gewonnen wird, dass die Notfallsituation ausgenutzt wird, beispielsweise die Verformungsenergie des Türbleches in elektrische Energie umgewandelt wird oder Ähnliches.

Die Figur 5 zeigt die Auslösevorrichtung 14 mit einem Auslösemittel 17 in Form eines länglichen Drahtes, das zwischen zwei Enden 17.1 und 17.2 aufgespannt ist. Dabei ruht das erste Ende 17.1 am Türgriff 10 und das zweite Ende 17.2 am Arretierelement 15. Dabei kann das zweite Ende 17.2 an einem Schenkel 15.2 des Arretierelementes 15 verrasten. Das Arretierelement 15 ist dabei schwenkbar am Vorsprung gelagert, welcher innenseitig am Türgriff 10 ausgebildet ist. Am anderen Schenkel des Arretierelementes 15 ist das Gegenrastmittel 15.1 ausgeformt, das mit dem Rastmittel 11.1 des Abdeckelementes 11 verrasten kann, welches in der Figur 6a gezeigt ist. Das Arretierelement 15 ist dabei durch die Feder 14.3 entgegen einer Richtung A vorgespannt, d. h. in die Richtung von der Freigabelage IV in die Arretierlage III. Im Normalbetrieb liegt das Auslösemittel 17 locker am Türgriff 10 an. Das Auslösemittel 17 ist dabei in einer Führung innenseitig am Türgriff 10 geführt, wobei die Führung zum besseren Halten des Auslösemittels eine Reihe Haken aufweisen kann, die beispielsweise wechselseitig unten und oben in der Führung vorgesehen sein können. Ereignet sich jedoch eine Notfallsituation, so wird Spannung zwischen zwei Stromanschlüssen 14.4 und 14.5 angelegt, die nahe den Enden 17.1 und 17.2 des Auslösemittels 17 am Türgriff 10 ausgebildet sind. Daraufhin erwärmt sich das Auslösemittel 17 und zieht sich zusammen. Als Folge zieht das zweite Ende 17.2 des Auslösemittels 17 am Schenkel 15.2 des Arretierelementes 15 und verschwenkt diesen in die Richtung A um den Vorsprung, d. h. in die Richtung von der Arretierlage III in die Freigabelage IV. In diese Richtung A wird das Gegenrastmittel 15.1 aus dem Rastmittel 11.1 losgelöst und gibt somit das Abdeckelement 11 frei. Daneben kann erfindungsgemäß vorgesehen sein, dass das Auslösemittel 17 unterschiedliche Technologien ausnutzen kann, um in einer Notfallsituation angesteuert zu werden. Denkbar ist dabei eine mechanische, elektrische, kombinierte elektro-magnetische oder elektro-mechanische sowie pyrotechnische Ansteuerung des Auslösemittels 17.

Abschließend ist noch zu erwähnen, dass die hier dargestellten Ausführungsbeispiele und Varianten des erfindungsgemäßen Türgriffes 10 beliebig miteinander kombinierbar sind, sofern sich diese nicht explizit ausschließen. So kann beispielsweise die Arretierung des Abdeckelementes 11 auf unterschiedliche Weise erfolgen. Weiterhin ist es denkbar, dass das Abdeckelement 11 ohne das Arretierelement 15 direkt durch die Auslösevorrichtung 14 angesteuert werden kann. Insbesondere kann es vorgesehen sein, dass die Auslösevorrichtung 14 verschiedene Technologien ausnutzen kann, um das Auslösemittel 17 zu betätigen.

### Bezugszeichenliste

- 10: Türgriff
- 10.1: Stift
- 11: Abdeckkappe
- 11.1: Rastmittel
- 11.2: Verbindungsmittel
- 12: Zugmittel
- 12.1: komplementäres Verbindungsmittel
- 13: Verlierschutz
- 14: Auslösevorrichtung
- 14.1: Haltemittel
- 14.2: Druckmittel
- 14.3: Feder
- 14.4: Stromanschluss
- 14.5: Stromanschluss
- 15: Arretierelement
- 15.1: Gegenrastmittel
- 15.2: Greifende
- 16: Schlitz im Türgriff
- 17: Auslösemittel
- 17.1: erstes Ende
- 17.2: zweites Ende

- 20: Elektronik

- 100: Montageelement
- 101: Schließzylinder
- 102: Fahrzeugtür, Fahrzeugklappe, Karosserie
- I: Abdeckposition des Abdeckelementes
- II: Offenposition des Abdeckelementes

- III: Arretierlage des Arretierelementes
- IV: Freigabelage des Arretierelementes

- A: Richtung zum automatischen Überführen des Arretierelementes in die Freigabelage
- B: Richtung zum manuellen Überführen des Arretierelementes in die Freigabelage

## Patentansprüche

1. Türgriff (10) für eine Fahrzeugtür eines Kraftfahrzeuges, mit
einem abnehmbaren Abdeckelement (11), insbesondere zum Abdecken eines Schließzylinders (101),
wobei der Schließzylinder (101) zum Ent- und Verriegeln eines Türschlosses vorgesehen ist,
und wobei das Abdeckelement (11) zwischen mindestens zwei Positionen (I, II) bewegbar ist, nämlich
einer Abdeckposition (I), in welcher insbesondere der Schließzylinder (101) von außen unzugänglich durch das Abdeckelement (11) abgedeckt ist,
und einer Offenposition (II), in welcher insbesondere der Schließzylinder (101) durch das Abdeckelement (11) freigelegt ist,
wobei eine Auslösevorrichtung (14) für das Abdeckelement (11) vorgesehen ist, um das Abdeckelement (11), insbesondere in einer Notfallsituation, automatisch in die Offenposition (11) zu überführen, wobei eine Steuereinheit für die Auslösevorrichtung (14) vorgesehen ist, um die Auslösevorrichtung (14) anzusteuern,
**dadurch gekennzeichnet,**
**dass** in der Offenposition (11) des Abdeckelementes (11) ein Zugmittel (12) zum Betätigen des Türschlosses mit dem Abdeckelement (11) in mechanischer Wirkverbindung ist, um durch Ziehen am Abdeckelement (11) das Türschloss zu betätigen.

2. Türgriff (10) nach Anspruch 1,
**dadurch gekennzeichnet,**
**dass** der Türgriff (10) als feststehender, insbesondere relativ zur Fahrzeugtür unbeweglicher KFZ-Türaußengriff (10) ausgebildet ist.

3. Türgriff (10) nach Anspruch 1 oder 2,
**dadurch gekennzeichnet,**
**dass** das Zugmittel (12) zum mechanischen Betätigen des Türschlosses ausgelegt ist, wobei insbesondere das Türschloss mechanisch und/oder elektrisch betätigbar ausgebildet ist.

4. Türgriff (10) nach einem der vorgenannten Ansprüche,
**dadurch gekennzeichnet,**
**dass** das Zugmittel (12) in Form eines Bowdenzuges oder einer Kette ausgebildet ist, und dass insbesondere das Zugmittel (12) aus einem flexiblen Material ausgebildet ist.

5. Türgriff (10) nach einem der vorgenannten Ansprüche,
**dadurch gekennzeichnet,**
**dass** das Abdeckelement (11) einen Verlierschutz (13), insbesondere in Form eines Gelenkes, eines Seils oder eines Scharniers, aufweist, um das Abdeckelement in der Offenposition verlierfest zu halten,
und **dass** insbesondere der Verlierschutz (13) eine Verlängerung des Zugmittels (12) ist.

6. Türgriff (10) nach einem der vorhergehenden Ansprüche,
**dadurch gekennzeichnet,**
**dass** ein Arretierelement (15) für das Abdeckelement (11), insbesondere in Form eines Klemm- eines Rast- oder eines Clipelementes, vorgesehen ist, weiches zwischen mindestens zwei Lagen (III, IV) bewegbar ist, nämlich
einer Arretierlage (III), in welcher das Abdeckelement (11) in der Abdeckposition (I) durch das Arretierelement (15), insbesondere kraft- und/oder formschlüssig, abgesichert ist, und einer Freigabelage (IV), in welcher das Abdeckelement (11) zum Überführen in die Offenposition (II) durch das Arretierelement (15) freigegeben ist.

7. Türgriff (10) nach einem der vorhergehenden Ansprüche,
**dadurch gekennzeichnet,**
**dass** das Abdeckelement (11) durch Einführung eines Öffnungsmittels, insbesondere eines Schlüsselbarts eines Notschlüssels, in einen Schlitz (16) im Türgriff (10) abnehmbar ausgebildet ist, um mechanisch auf das Abdeckelement (11), insbesondere auf das Arretierelement (15), einzuwirken und das Abdeckelement (11) in die Offenposition (II), insbesondere das Arretierelement (15) in die Freigabelage (IV), zu überführen.

8. Türgriff (10) nach einem der vorhergehenden Ansprüche,
**dadurch gekennzeichnet,**
**dass** die Auslösevorrichtung (14) ein Auslösemittel (17) aufweist, um bei einem Unfall auf das Abdeckelement (11), insbesondere auf das Arretierelement (15), automatisch, insbesondere mechanisch, elektrisch, elektro-magnetisch, elektro-mechanisch oder pyrotechnisch, einzuwirken und das Abdeckelement (11) in die Offenposition (II), insbesondere das Arretierelement (15) in die Freigabelage (IV), zu überführen,
wobei insbesondere das Auslösemittel (17) in Form eines Form-Gedächtnis-Legierungs-Elementes (FGL-Elementes), eines permanenten oder elektrischen Magneten oder eines Piezo-Elementes ausgebildet ist.

9. Türgriff (10) nach einem der vorhergehenden Ansprüche,
**dadurch gekennzeichnet,**
**dass** die Auslösevorrichtung (14) mit mindestens einem Notfallsituationssensor bzw. Crashsensor in Verbindung bringbar ist, wobei insbesondere bei Detektieren einer Notfallsituation durch den mindestens einen Notfallsituationssensor die Auslösevorrichtung (14) aktivierbar ist, um das Abdeckelement (11) in die Offenposition (I), insbesondere das Arretierelement (15) in die Freigabelage (III), zu überführen.

10. Türgriff (10) nach einem der vorhergehenden Ansprüche,
**dadurch gekennzeichnet,**
**dass** das Abdeckelement (11) und das Zugmittel (12) direkt oder über ein Verbindungsmittel (11.2) miteinander verbunden sind,
und/oder dass das Verbindungsmittel (11.2) in Form einer Aufnahme, eines Hakens, einer Öse, einer Klemme oder eines Clips ausgebildet ist, um am Zugmittel (12) einzugreifen,
und/oder dass das Abdeckelement (11) und das Zugmittel (12) materialeinheitlich, insbesondere als ein monolithisches Bauteil, ausgebildet sind,
und/oder dass im Türgriff (10) ein Keyless-Entry-System integriert ist.

11. Türgriff (10) nach einem der vorhergehenden Ansprüche,
**dadurch gekennzeichnet,**
**dass** der Türgriff (10) und/oder das Abdeckelement (11) aus einem Kunststoff, insbesondere in Form eines Kunststoffspritzgussteils, ausgebildet ist.

12. Türgriff (10) nach einem der vorhergehenden Ansprüche,
**dadurch gekennzeichnet,**
**dass** die Steuereinheit in einer zentralen Steuereinheit des Kraftfahrzeuges integriert ist.

13. Türgriff (10) nach einem der vorhergehenden Ansprüche,
**dadurch gekennzeichnet,**
**dass** im Türgriff (10), insbesondere unterhalb des Abdeckelementes, mindestens ein Näherungssensor, insbesondere in Form eines kapazitiven, optischen, akustischen Sensors oder eines Drucksensors, integriert ist, um eine Annäherung eines Benutzers an das Kraftfahrzeug zu erfassen.

14. Türgriff (10) nach einem der vorhergehenden Ansprüche,
**dadurch gekennzeichnet,**
**dass** ein Sicherheitssystem für den Türgriff (10) vorgesehen ist, um eine Berechtigung eines Benutzers abzufragen.

15. Türgriff (10) nach einem der vorhergehenden Ansprüche,
**dadurch gekennzeichnet,**
**dass** eine Notstromversorgung für die Auslösevorrichtung (14) vorgesehen ist, um die Auslösevorrichtung zu aktivieren,
und **dass** insbesondere die Notstromversorgung zumindest einen Kondensator, einen Goldcap-Kondensator, einen Akkumulator oder einen Folienakkumulator aufweist, um die Auslösevorrichtung (14) mit Energie zu versorgen.

## Claims

1. Door handle (10) for a vehicle door of a motor vehicle, comprising
a removable cover element (11), in particular for covering a locking cylinder (101), wherein the locking cylinder (101) is provided for unlocking and locking a door lock,
and wherein the cover element (11) is movable between at least two positions (I, II), namely a cover position (I), in which in particular the locking cylinder (101) is covered by the cover element (11) so as to be inaccessible from the outside,
and an open position (II), in which in particular the locking cylinder (101) is exposed by the cover element (11),
wherein a release device (14) for the cover element (11) is provided in order to automatically transfer the cover element (11) into the open position (II), in particular in an emergency situation, wherein a control unit is provided for the release device (14) in order to control the release device (14),
**characterized in that**
in the open position (II) of the cover element (11), a pulling means (12) for actuating the door lock is in mechanical operative connection with the cover element (11) in order to actuate the door lock by pulling on the cover element (11).

2. Door handle (10) according to claim 1,
**characterized in that**
the door handle (10) is designed as a fixed motor vehicle door outer handle (10), which, in particular, is immovable relative to the vehicle door.

3. Door handle (10) according to claim 1 or 2,
**characterized in that**
the pulling means (12) is designed for mechanical actuation of the door lock,
wherein in particular the door lock is designed to be mechanically and/or electrically actuated.

4. Door handle (10) according to any of the preceding claims,
**characterized in that**
the pulling means (12) is in the form of a Bowden cable or a chain, and in particular the pulling means (12) is formed from a flexible material.

5. Door handle (10) according to any of the preceding claims,
**characterized in that**
the cover element (11) comprises a loss protection (13), in particular in the form of a joint, a rope or a hinge, in order to hold the cover element in the open position in a loss-proof manner,
and in particular the loss protection (13) is an extension of the pulling means (12).

6. Door handle (10) according to any one of the preceding claims,
**characterized in that**
a locking element (15) is provided for the cover element (11), in particular in the form of a clamping, an engaging or a clip element, which is movable between at least two poses (III, IV), namely
a locking pose (III) in which the cover element (11) is secured in the cover position (I) by the locking element (15), in particular in a force- and/or form-locking manner,
and a release pose (IV) in which the cover element (11) is released by the locking element (15) for transfer to the open position (II).

7. Door handle (10) according to any one of the preceding claims,
**characterized in that**
the cover element (11) is designed such that it can be removed by introducing an opening means, in particular a key bit of an emergency key, into a slot (16) in the door handle (10) in order to act mechanically on the cover element (11), in particular on the locking element (15), and to transfer the cover element (11) into the open position (II), in particular to transfer the locking element (15) into the release pose (IV).

8. Door handle (10) according to any one of the preceding claims,
**characterized in that**
the release device (14) comprises a release means (17) in order to act automatically, in particular mechanically, electrically, electro-magnetically, electro-mechanically or pyrotechnically, on the cover element (11), in particular on the locking element (15), in the event of an accident and to transfer the cover element (11) into the open position (II), in particular the locking element (15) into the release pose (IV),
wherein in particular the release means (17) is designed in the form of a shape memory alloy element (FGL-element), a permanent or electric magnet or a piezo element.

9. Door handle (10) according to any one of the preceding claims,
**characterized in that**
the release device (14) can be brought into connection with at least one emergency situation sensor or crash sensor, wherein the release device (14) can be activated, in particular when an emergency situation is detected by the at least one emergency situation sensor, in order to transfer the cover element (11) into the open position (I), in particular the locking element (15) into the release pose (III).

10. Door handle (10) according to any one of the preceding claims,
**characterized in that**
the cover element (11) and the pulling means (12) are connected to each other directly or via a connecting means (11.2),
and/or the connecting means (11.2) is in the form of a receptacle, a hook, an eye, a clamp or a clip to engage the pulling means (12),
and/or the cover element (11) and the pulling means (12) are of unitary material design, in particular as a monolithic component,
and/or a keyless-entry system is integrated in the door handle (10).

11. Door handle (10) according to any one of the preceding claims,
**characterized in that**
the door handle (10) and/or the cover element (11) is formed from a plastic, in particular in the form of a plastic injection-molded part.

12. Door handle (10) according to any one of the preceding claims,
**characterized in that**
the control unit is integrated in a central control unit of the motor vehicle.

13. Door handle (10) according to anyone of the preceding claims,
**characterized in that**
at least one proximity sensor, in particular in the form of a capacitive, optical, acoustic sensor or a pressure sensor, is integrated in the door handle (10), in particular below the cover element, in order to detect an approach of a user to the motor vehicle.

14. Door handle (10) according to any one of the preceding claims,
**characterized by the** fact that
a security system for the door handle (10) is provided to query an authorization of a user.

15. Door handle (10) according to any one of the preceding claims,
**characterized in that**
an emergency power supply is provided for the release device (14) to activate the release device,
and in particular the emergency power supply comprises at least one capacitor, a gold-cap capacitor, an accumulator or a foil accumulator in order to supply the release device (14) with energy.

## Revendications

1. Poignée de porte (10) pour une porte de véhicule d'un véhicule automobile, comprenant un élément de recouvrement (11) amovible, en particulier pour recouvrir un cylindre de serrure (101),
dans lequel le cylindre de serrure (101) est prévu pour déverrouiller et verrouiller une serrure de porte,
et dans lequel l'élément de recouvrement (11) est mobile entre au moins deux positions (I, II), à savoir
une position de recouvrement (I), dans laquelle en particulier le cylindre de serrure (101) est recouvert par l'élément de recouvrement (11) de manière à être inaccessible de l'extérieur,
et une position ouverte (II), dans laquelle en particulier le cylindre de serrure (101) est exposé par l'élément de recouvrement (11),
dans lequel il est prévu un dispositif de déverrouillage (14) pour l'élément de recouvrement (11) afin de faire passer automatiquement l'élément de recouvrement (11) en position ouverte (II), en particulier dans une situation d'urgence, dans lequel il est prévu une unité de commande pour le dispositif de déverrouillage (14) afin de commander le dispositif de déverrouillage (14),
**caractérisé en ce que**
dans la position ouverte (II) de l'élément de recouvrement (11), un moyen de traction (12) pour actionner la serrure de porte est en liaison opérationnelle mécanique avec l'élément de recouvrement (11) afin d'actionner la serrure de porte en tirant sur l'élément de recouvrement (11).

2. Poignée de porte (10) selon la revendication 1,
**caractérisé en ce que**
la poignée de porte (10) est conçue comme une poignée de porte extérieure (10) fixe du véhicule automobile qui est, en particulier, immobile par rapport à la porte de véhicule.

3. Poignée de porte (10) selon la revendication 1 ou 2,
**caractérisé en ce que**
le moyen de traction (12) est conçu pour actionner mécaniquement la serrure de porte, dans lequel, en particulier, la serrure de porte est conçue pour être actionnée mécaniquement et/ou électriquement.

4. Poignée de porte (10) selon l'une des revendications précédentes,
**caractérisé en ce que**
le moyen de traction (12) se présente sous la forme d'un câble Bowden ou d'une chaîne, et **en ce que**, en particulier, le moyen de traction (12) est constitué d'un matériau flexible.

5. Poignée de porte (10) selon l'une des revendications précédentes,
**caractérisé en ce que**
l'élément de recouvrement (11) présente un moyen de protection contre les pertes (13), en particulier sous la forme d'une articulation, d'un câble ou d'une charnière, afin de maintenir l'élément de recouvrement dans la position ouverte de manière à ce qu'il ne subisse aucune perte,
et en particulier le moyen de protection contre les pertes (13) est une extension du moyen de traction (12).

6. Poignée de porte (10) selon l'une des revendications précédentes,
**caractérisé en ce qu'**
un élément de verrouillage (15) est prévu pour l'élément de recouvrement (11), en particulier sous la forme d'un élément de serrage, d'un élément d'encliquetage ou d'un élément de clip, qui peut être déplacé entre au moins deux places (III, IV), à savoir
une place de verrouillage (III) dans laquelle l'élément de recouvrement (11) est fixé dans la position de recouvrement (I) par l'élément de verrouillage (15), en particulier par force et/ou par forme,
et une place de libération (IV) dans laquelle l'élément de recouvrement (11) est libéré par l'élément de verrouillage (15) pour être transféré en position ouverte (II).

7. Poignée de porte (10) selon l'une des revendications précédentes,
**caractérisé en ce que**
l'élément de recouvrement (11) est conçu de manière à pouvoir être retiré en introduisant un moyen d'ouverture, en particulier un panneton d'une clé d'urgence, dans une fente (16) de la poignée de porte (10) afin d'agir mécaniquement sur l'élément de recouvrement (11), en particulier sur l'élément de verrouillage (15), et de transférer l'élément de recouvrement (11) dans la position ouverte (II), en particulier l'élément de verrouillage (15) dans la place de libération (IV).

8. Poignée de porte (10) selon l'une des revendications précédentes,
**caractérisé en ce que**
le dispositif de déverrouillage (14) comprend un moyen de déverrouillage (17) pour, en cas d'accident, agir automatiquement, en particulier de manière mécanique, électrique, électromagnétique, électromécanique ou pyrotechnique, sur l'élément de recouvrement (11), en particulier sur l'élément de verrouillage (15), et pour transférer l'élément de recouvrement (11) dans la position ouverte (II), en particulier l'élément de verrouillage (15) dans la place de libération (IV),
dans lequel, en particulier, le moyen de déverrouillage (17) se présente sous la forme d'un élément en alliage à mémoire de forme (élément FGL), d'un aimant permanent ou électrique ou d'un élément piézoélectrique.

9. Poignée de porte (10) selon l'une des revendications précédentes,
**caractérisé en ce que**
le dispositif de déverrouillage (14) peut être mis en liaison avec au moins un capteur de situation d'urgence ou un capteur de collision, le dispositif de déverrouillage (14) pouvant être activé, en particulier lorsqu'une situation d'urgence est détectée par le au moins un capteur de situation d'urgence, afin de transférer l'élément de recouvrement (11) dans la position ouverte (I), en particulier l'élément de verrouillage (15) dans la place de libération (III).

10. Poignée de porte (10) selon l'une des revendications précédentes,
**caractérisé en ce que**
l'élément de recouvrement (11) et le moyen de traction (12) sont reliés entre eux directement ou par un moyen de connexion (11.2),
et/ou le moyen de connexion (11.2) se présente sous la forme d'un réceptacle, d'un crochet, d'un œillet, d'un serrage ou d'un clip pour engager le moyen de traction (12),
et/ou l'élément de recouvrement (11) et le moyen de traction (12) sont de conception matérielle unitaire, en particulier en tant que composant monolithique,
et/ou qu'un système d'entrée sans clé est intégré dans la poignée de porte (10).

11. Poignée de porte (10) selon l'une des revendications précédentes,
**caractérisé en ce que**
la poignée de porte (10) et/ou l'élément de recouvrement (11) est constitué d'une matière plastique, en particulier sous la forme d'une pièce en matière plastique moulée par injection.

12. Poignée de porte (10) selon l'une des revendications précédentes,
**caractérisé en ce que**
l'unité de commande est intégrée dans une unité de commande centrale du véhicule automobile.

13. Poignée de porte (10) selon l'une des revendications précédentes,
**caractérisé en ce qu'**
au moins un capteur de proximité, en particulier sous la forme d'un capteur capacitif, optique, acoustique ou d'un capteur de pression, est intégré dans la poignée de porte (10), en particulier sous l'élément de recouvrement, afin de détecter l'approche d'un utilisateur vers le véhicule automobile.

14. Poignée de porte (10) selon l'une des revendications précédentes,
**caractérisé par le fait qu'**
un système de sécurité est prévu pour la poignée de porte (10) afin d'interroger l'autorisation d'un utilisateur.

15. Poignée de porte (10) selon l'une des revendications précédentes,
**caractérisé en ce qu'**
une alimentation électrique d'urgence est prévue pour le dispositif de déverrouillage (14) afin d'activer le dispositif de déverrouillage,
et en particulier l'alimentation électrique d'urgence comprend au moins un condensateur, un condensateur à bouchon d'or, un accumulateur ou un accumulateur à film pour alimenter en énergie le dispositif de déverrouillage (14).
